# EUROPÄISCHE PATENTANMELDUNG

(11) **EP 3 043 095 A1**
(43) Veröffentlichungstag der Anmeldung: **13.07.2016**
(21) Anmeldenummer: 16000045.1
(22) Anmeldetag: 12.01.2016
(51) Int. Cl.: F16K 5/06, F16K 17/40, F16K 27/06

(54) **SEGMENTVENTIL**

(30) Priorität: 12.01.2015 DE 102015100331
(71) Anmelder: Andocksysteme G. Untch GmbH, 79410 Badenweiler (DE)
(72) Erfinder: Günter, Untch, 79410 Badenweiler (DE)
(74) Vertreter: Westphal, Mussgnug & Partner Patentanwälte mbB

(57) **Zusammenfassung**

Die Erfindung betrifft ein Segmentventil (1), insbesondere Kugelsegmentventil, mit einem Verschlusskörper und einer Körperaufnahme, zum Absperren und vollständigen Öffnen zumindest eines vollständigen Zentralbereichs einer Durchtrittsöffnung, wobei
- der Verschlusskörper zumindest in zwei Segmentteile geteilt ist, nämlich zumindest in ein Aktivsegmentteil (6) und ein Passivsegmentteil (7) und dass
- die Körperaufnahme in zumindest zwei Aufnahmeteile geteilt ist, nämlich zumindest in ein erstes Aufnahmeteil (70) für das Passivsegmentteil (7) und ein zweites Aufnahmeteil (60) für das Aktivsegmentteil (6),
- wobei die Aufnahmeteile (70, 60) aus einer getrennten Lage heraus zum Erreichen einer verbundenen Lage lösbar miteinander verbindbar sind und wobei
- in der getrennten Lage das Passivsegmentteil (7) in dem ersten Aufnahmeteil (70) zumindest fixiert ist.

## Beschreibung

Die Erfindung betrifft ein Segmentventil nach dem Oberbegriff des Anspruchs 1. Ein gattungsgemäßes Segmentventil ist beispielsweise ein Kugelsegmentventil. Das Segmentventil weist einen Verschlusskörper und eine Körperaufnahme auf, zum Absperren und vollständigen Öffnen zumindest eines vollständigen Zentralbereichs einer Durchtrittsöffnung. Bei einem Kugelsegmentventil ist der Begriff Segment im Namen enthalten, weil nur ein Teil des Grundkörpers, welcher der Gestaltung des Verschlusskörpers zugrunde liegt, den Verschlusskörper bildet.

Die Erfindung betrifft nach Anspruch 13 weiterhin ein Andockverfahren zum kontaminationsfreien Verbinden zweier Gebinde oder Rohrleitungen mit einem Segmentventil.

Die Erfindung betrifft weiterhin nach Anspruch 18 ein Aufnahmeteil eines Segmentventils mit einem eingesetzten Verschlusskörper.

Die Erfindung betrifft weiterhin nach dem Oberbegriff des Anspruchs 19 ein Doppelventil mit zumindest zwei Verschlusskörpern, insbesondere zwei Kugelsegmenten, zum zumindest weitgehend kontaminationsfreien Verbinden zweier Gebinde miteinander oder zum zumindest weitgehend kontaminationsfreien Verbinden eines Gebindes mit einem Rohrleitungssystem oder zum anderweitigen derartigen Andocken.

Beispielsweise in der US 2007/0029517 A1 ist ein Segmentventil beschrieben, das einen Verschlusskörper um eine segmentexterne Achse aus einer Durchströmungsöffnung herausschwenken kann, um einen Rohrquerschnitt vollständig für das Durchströmen eines Schüttguts freizugeben. Diese Ventiltechnik ist jedoch auf ein kontaminationsfreies Andockverfahren bisher erst anwendbar, wenn sie kombiniert wird mit einem weiteren Kugelsegmentventil oder einer Doppelklappenvorrichtung gemäß beispielsweise DE 10 2011 009 303 A1.

Eine solche bekannte Doppelklappenvorrichtung nach DE 10 2011 009 303 ist in **Figur 1** dargestellt. In der oben genannten Kombination zur Verwendung in einem zumindest beinahe kontaminationsfreien Andockverfahren ist eine dreiteilige Klappe 10, 20, 30 um eine zentrale Querachse, im Weiteren als klappeninterne Achse Ai bezeichnet, drehbar in einem Gehäuse 24 angeordnet, durch das ein Schüttgut in Durchflussrichtung D leitbar sein soll. Dabei steht die Klappe selbst in ihrer Durchgangsstellung körperlich im Produktstrom, sodass Schüttgut durch sie behindert wird, zumindest jedoch bis auf weiteres auf ihr liegen bleibt.

Die EP 2 454 158 B1 sieht es beispielsweise als problematisch an, dass solche Mehrfachklappensysteme teuer und im Rohrquerschnitt schnell begrenzt sind. Versuche mit Materialkombinationen Metall/Kunststoff basierend auf der Mehrfachklappenvorrichtung sind demnach problematisch. Die EP 2 454 158 B1 schlägt daher als Alternative zur Doppelklappenvorrichtung ein Verbindungsstück vor, das einen Zapfen aufweist. Das Verbindungsstück ist so angeordnet, dass der Zapfen zwischen einer ersten Position und einer zweiten Position verstellt werden kann. In der ersten Position ermöglicht es der Zapfen einem aktiven Ventil, sich zu schließen. In der zweiten Position wird der Zapfen in einer offenen Position gehalten, wobei der Zapfen einen Durchgang für durch das aktive Ventil fließende Material liefert. Dabei wird angeblich im Wesentlichen verhindert, dass das aktive Ventil dem fließenden Material ausgesetzt wird.

Als Problem lässt sich jedoch nach wie vor formulieren, dass es einer Vorrichtung und eines Verfahrens für ein möglichst kontaminationsfreies Andocken bedarf, die bzw. das einen Anschluss an einen Verschluss und einen freien Materialstrom erlaubt oder den Verschluss selbst ersetzt. Besonders gefragt wäre es, wenn Materialkombinationen Kunststoff/Metall in der Funktionalität möglichst uneingeschränkt einsetzbar wären.

Dieses Problem wird durch ein Segmentventil mit den Merkmalen des Anspruchs 1 umfassend seine kennzeichnenden Merkmale, ein Andockverfahren nach Anspruch 13, eine Verwendung eines Segmentventils nach Anspruch 17, ein Aufnahmeteil nach Anspruch 18 und / oder ein Doppelventil nach Anspruch 19 gelöst.

Weitere vorteilhafte Ausgestaltungen der Erfindung bilden die Gegenstände der jeweiligen Unteransprüche.

Der Verschlusskörper des Segmentventils ist erfindungsgemäß zumindest in zwei Segmentteile geteilt, nämlich zumindest in ein Aktivsegmentteil und ein Passivsegmentteil. Die Körperaufnahme ist in zumindest zwei Aufnahmeteile geteilt, nämlich zumindest in ein erstes Aufnahmeteil für das Passivsegmentteil und ein zweites Aufnahmeteil für das Aktivsegmentteil.

Die Aufnahmeteile sind aus einer getrennten Lage heraus zum Erreichen einer verbundenen Lage lösbar miteinander verbindbar. In der getrennten Lage ist das Passivsegmentteil in dem ersten Aufnahmeteil zumindest fixiert, beispielsweise mittels einer Einklebung. Es haben sich während der Entwicklung des Segmentventils vorteilhafte Ausführungsformen hervorgetan, bei denen das Passivsegmentteil und das erste Aufnahmeteil vollständig aus Kunststoff bestehen und die Einklebung eine Sollbruchstelle aufweist.

Gemäß einer weiteren vorteilhaften Ausführungsform des Segmentventils weist das erste Aufnahmeteil eine Verriegelung zum reversibel lösbaren Fixieren auf. Das oben beschriebene Einkleben soll als eine Variante einer Verriegelung verstanden sein.

Damit ist erstmals eine Übertragung von Denkprinzipien aus der Mehrfachklappentechnik, die bisher auf klappeninterne Achsdrehungen beschränkt war, auf die Segmentschiebertechnik gelungen, deren Segment bisher ungeteilt um segmentexterne Achsen drehen. Es kann in der Konsequenz mit deutlich geringerer Bauhöhe ein kontaminationsfreier Anschluss eines Gebindes mit fließfähigem Schüttgut an eine Vorrichtung zur weiteren Verarbeitung oder an ein Rohrleitungssystem oder dergleichen erfolgen. Die Kombination von Kunststoff und Metall, beispielsweise Kunststoff auf der Seite eines Einweggebindes und Metall auf der Vorrichtungsseite, ist nun möglich geworden, ohne die präzise Wirkungsweise der Mehrfachklappentechnik und der Segmentschiebertechnik verlassen zu müssen. Somit ist es gelungen, eine Verbindung von Edelstahlarmaturen mit Single-Use-Einheiten zu realisieren.

Die bestehenden Nachteile der Mehrfachklappentechnik, nämlich beispielsweise, dass in Durchgangsstellung der Klappen nach Drehung um die klappeninterne Achse ausgerechnet auf die problematische Schnittstelle zwischen den Klappen das Schüttgut prallt, werden umgangen.

Gemäß einer weiteren vorteilhaften Ausführungsform des Segmentventils ist zumindest in der verbundenen Lage das Aktivsegmentteil gemeinsam mit dem Passivsegmentteil, unter Kraftübertragung von dem Aktivsegmentteil auf das Passivsegmentteil, in dem zweiten Aufnahmeteil, die Durchtrittsöffnung zumindest weitgehend, bevorzugt vollständig freigebend bewegbar. Besonders vorteilhaft ist eine Ausführungsform, bei der beide Segmentteile um eine aktivsegmentexterne Achse drehbar sind.

Gemäß einer weiteren vorteilhaften Ausführungsform des Segmentventils weist das erste Aufnahmeteil dem Passivsegmentteil zugewandt eine sich über den gesamten Umfang durchgehend in einem radialen Wandungsbereich erstreckende Passivdichtung auf. Diese Passivdichtung kann mittels der oben beschriebenen Einklebung oder auch durch präzise Fertigung und Materialwahl der sich begegnenden Teile ausgestaltet sein. Die Passivdichtung konnte auch erfolgreich als ein nicht integral ausgeführtes Dichtelement, wie nämlich als ein umlaufend angeordneter Gummiring ausgeführt werden.

Gemäß einer weiteren vorteilhaften Ausführungsform des Segmentventils weisen die Aufnahmeteile zum übereinstimmenden Ausrichten der Aufnahmeteile mit gemeinsamer Durchtrittsöffnung zumindest jeweils eine übereinstimmende Kontur auf, insbesondere eine über den vollständigen Umfang umlaufende Kontur. Die übereinstimmenden Konturen sind besonders bevorzugt radial außen umlaufend am ersten Aufnahmeteil und radial innen umlaufend am zweiten Aufnahmeteil ausgeführt.

Gemäß einer weiteren vorteilhaften Ausführungsform des Segmentventils bilden der Aktivsegmentteil und der Passivsegmentteil zumindest dem zweiten Aufnahmeteil zugewandt eine Oberfläche mit im Querschnitt gesehen gemeinsam stetigen, ineinander übergehenden Kurvenverlauf aus. Besonders vorteilhaft erscheint es bisher zu sein, wenn die Segmentteile gemeinsam ein Kugelsegment ausbilden.

Gemäß einer weiteren vorteilhaften Ausführungsform des Segmentventils hintergreift das erste Aufnahmeteil mit zumindest einem Verriegelungsmittel in der getrennten Lage das Passivsegmentteil zumindest teilumfänglich, um das Passivsegmentteil ansonsten über den vollständigen Umfang hinweg in dichtendem Kontakt mit dem ersten Aufnahmeteil zu halten.

Gemäß einer weiteren vorteilhaften Ausführungsform des Segmentventils ist die Passivdichtung als das hintergreifende Dichtungsmittel ausgebildet.

Gemäß einer weiteren vorteilhaften Ausführungsform des Segmentventils weist das erste Aufnahmeteil zumindest ein Entriegelungsmittel auf oder besteht es zumindest aus einem Entriegelungsmittel, das in zumindest einem Umfangsbereich entweder rotatorisch um eine gedachte, um die Durchtrittsöffnung herum verlaufende Umfangslinie oder in radialer Richtung translatorisch bewegbar ist oder bei mehrteiliger Ausbildung nach beiden Bewegungsformen bewegbar ist.

Gemäß einer weiteren vorteilhaften Ausführungsform des Segmentventils ist eine erste Aktivdichtung um die Durchtrittsöffnung, insbesondere entlang der übereinstimmenden Kontur gemäß Anspruch 5, umlaufend zwischen einem unbeweglichen Teil des ersten Aufnahmeteils und einem beweglichen Teil des ersten oder zweiten Aufnahmeteils angeordnet, insbesondere eine pneumatisch oder hydraulisch in ihren Eigenschaften veränderbare Aktivdichtung.

Gemäß einer weiteren vorteilhaften Ausführungsform des Segmentventils ist eine zweite Aktivdichtung in einem um die Durchtrittsöffnung umlaufenden Bereich zwischen dem Aufnahmeteil und dem Aktivsegmentteil angeordnet, insbesondere eine pneumatisch oder hydraulisch in ihren Eigenschaften veränderbare Aktivdichtung.

Gemäß einer weiteren vorteilhaften Ausführungsform des Segmentventils bilden die Segmentteile des Verschlusskörpers einander zugewandt in der verbundenen Lage einen vollflächigen oder zumindest teilflächigen Kontakt zueinander aus, insbesondere in einer gemeinsamen Sekantenebene und / oder in einer weiteren in Umfangsrichtung umlaufenden Kontur.

Das erfindungsgemäße Andockverfahren zum kontaminationsfreien Verbinden zweier Gebinde oder Rohrleitungen nutzt ein solches Segmentventil.

Ein solches Verfahren ist schon wegen der Reduzierung der Schnittstellen im Vergleich von bisher angewendeten Kombinationen aus beispielsweise Klappentechnik und Segmentschiebertechnik weniger fehleranfällig.

Gemäß einer vorteilhaften Ausführungsform des Andockverfahrens werden unter koaxialer Ausrichtung der zwei Segmentteile zum Verbund des Verschlusskörpers die Aufnahmeteile zueinander zentriert miteinander verbunden, insbesondere mittels der übereinstimmenden Kontur der Aufnahmeteile.

Gemäß einer weiteren vorteilhaften Ausführungsform des Andockverfahrens bewirkt das Verbinden der Aufnahmeteile ein Lösen der Fixierung des Passivsegmentteils gegenüber dem ersten Aufnahmeteil, insbesondere durch Bruch einer Einklebung des Passivsegmentteils in das erste Aufnahmeteil. Die hierfür erforderlichen Kräfte können beispielsweise beim Hintergreifen eines Spannverschlusses eingeleitet werden.

Somit werden bisher erforderliche in bestimmter Reihenfolge auszuführende Arbeitsschritte eingespart.

Gemäß einer weiteren vorteilhaften Ausführungsform des Andockverfahrens sind aus der verbundenen Lage heraus die Segmentteile des Verschlusskörpers um eine gemeinsame segmentexterne Achse herum aus einer die Durchtrittsöffnung vollständig verschließenden in eine die Durchtrittsöffnung vollständig öffnende Position schwenkbar, insbesondere einhergehend damit, dass die Segmentteile mit einer gemeinsamen den Aufnahmeteilen zugewandten Dichtfläche einen zumindest teilumfänglich der Dichtfläche zugewandt angeordneten Abstreifer berühren.

Ein Erfolg der Erfindung ist weiterhin generell eine Verwendung eines Segmentventils, insbesondere eines vorangehend beschriebenen erfindungsgemäßen Segmentventils, mit einem zumindest zweiteiligen Verschlusskörper in einer zumindest weitgehend kontaminationsfreien Verbindung zwischen einem Einweggebinde, das zumindest teilweise aus Kunststoff besteht, und einem Metallrohrleitungssystem oder -anschluss, wobei besonders bevorzugt ein vollständig aus Kunststoff bestehender Verschluss des Einweggebindes ein funktionaler Bestandteil des Segmentventils ist.

Ein Ergebnis der Erfindung ist weiterhin generell ein Aufnahmeteil eines erfindungsgemäßen Segmentventils mit dem jeweiligen eingesetzten Segmentteil des geteilten Verschlusskörpers. Hiermit ist insbesondere für den Fall der Aufnahme des vollständig aus Kunststoff bestehenden Segmentteils, das besonders bevorzugt die Form eines Kugelsegments aufweist, ein neuartiger, kontaminationsfrei andockbarer Verschluss für Single-Use-Einheiten geschaffen.

Bei einem erfindungsgemäßen Doppelventil ist zumindest einer der Verschlusskörper zumindest zweiteilig ausgeführt, und zwar zumindest in ein Aktivsegmentteil und ein Passivsegmentteil.

Hat man bisher mit beträchtlicher Bauhöhe bevorzugt ein teures Doppelklappensystem an ein Kugelsegmentventil angedockt, um ein Gebinde kontaminationsfrei zu entleeren, geschieht dies nun mit einem deutlich kompakter bauenden Doppelventil, dass einen geteilten Verschlusskörper aufweist, der an einer bisher nicht genutzten Position geteilt ist, nämlich im Segment eines Segmentventils. Nun ist demnach auch eine günstigere Ersatzkombination aus erfindungsgemäßem Segmentventil mit Einfachklappe denkbar, um denselben oder einen besseren Effekt zu erreichen.

Gemäß einer vorteilhaften Ausführungsform des Doppelventils sind ein erster der zumindest zwei Verschlusskörper um eine erste Rotationsachse und ein zweiter der zumindest zwei Verschlusskörper um eine zweite, von der ersten Rotationsachse beabstandeten Rotationsachse aus der Durchtrittsöffnung herausschwenkbar sind.

Neben der Kombination erfindungsgemäßes Segmentventil / herkömmliches Segmentventil fällt auch eine Kombination erfindungsgemäßes Segmentventil / zweites erfindungsgemäßes Segmentventil hierunter, was bedeutende Vorteile bietet.

Gemäß einer weiteren vorteilhaften Ausführungsform des Doppelventils sind die Verschlusskörper mechanisch aneinander gekoppelt oder unabhängig voneinander bewegbar ausgeführt.

Das bringt je nach Anwendung Vorteile im Hinblick auf die Prozesssicherheit oder Zugänglichkeit.

Nachfolgend wird die Erfindung anhand von einem in Figuren dargestellten Ausführungsbeispiel näher beschrieben. Es zeigen
**Fig. 1** eine perspektivische Darstellung einer angedockten Dreifachklappenvorrichtung nach dem **Stand der Technik** in einer Offenstellung der Klappen,
**Fig. 2** eine schematische Darstellung eines Schnittes durch ein erfindungsgemäßes Segmentventil in einer verbundenen Lage mit verschlossener Durchtrittsöffnung,
**Fig. 3** einen vergrößerten Ausschnitt des Schnittes der Figur 2 in einem Wandungsbereich mit der Schnittstelle Aufnahmeteile und Segmentteile und
**Fig. 4** einen noch weiter vergrößerten Bereich des Schnittes der Figur 2, der als eine vorteilhafte Ausführungsform einer Fixierung eine hintergreifende Aufnahme des Passivsegmentteils zeigt.

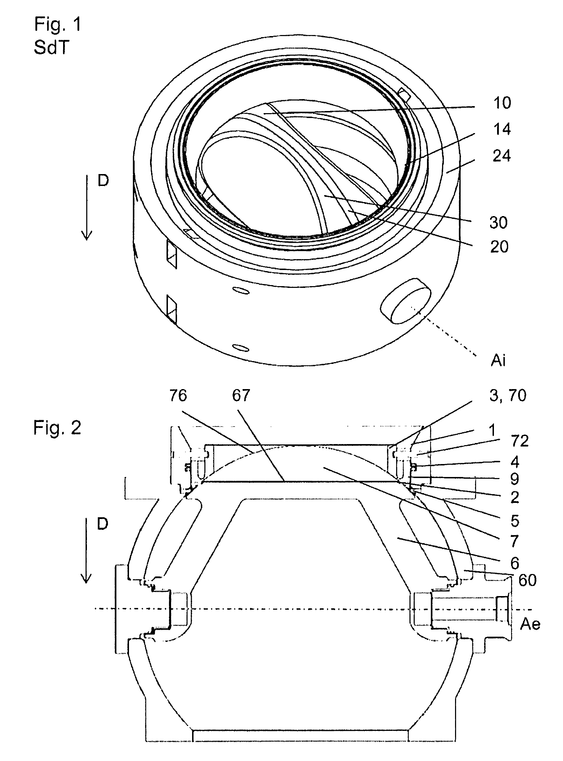

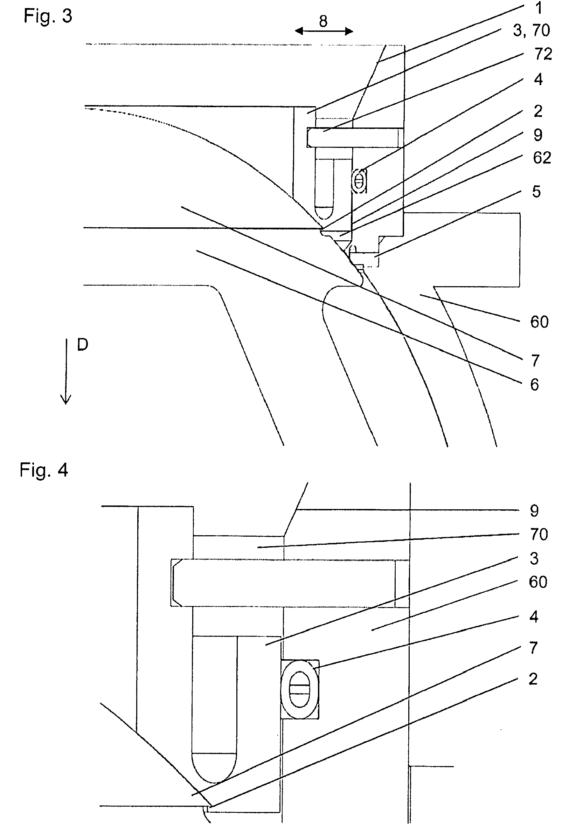

Ein erfindungsgemäßes Ausführungsbeispiel des Segmentventils ist in den **Figuren 2 bis 4** dargestellt. Die Bezugszeichen sind zur besseren Übersicht nicht sämtlich in allen Vergrößerungsstufen eingetragen. Die Figurenschreibung des Segmentventils umfasst die weitere Beschreibung des Andockverfahrens, der Verwendung des Segmentventils, des jeweiligen Aufnahmeteils nach beiden Fällen passiv/aktiv, nicht allerdings des Doppelventils. Ein erfindungsgemäßes Doppelventil bieten jedoch die Figuren 1 und 2 ggf. in Zusammenschau. Aus beispielsweise zwei dargestellten Segmentventilen der Figur 2 oder einem dargestellten Segmentventil der Figur 2 mit einer dargestellten Mehrfachklappenvorrichtung nach dem Stand der Technik aus Fig. 1 lässt sich ein erfindungsgemäßes Doppelventil konstruieren.

Das Segmentventil 1 gemäß dem dargestellten Ausführungsbeispiel der Figuren 2 bis 4 ist als Kugelsegmentventil ausgeführt. Es hat einen geteilten Verschlusskörper und zur Körperaufnahme zwei Aufnahmeteile. Dies dient zum Absperren und vollständigen Öffnen für das Durchfließen eines Schüttguts in einer Durchtrittsrichtung D, zumindest eines vollständigen Zentralbereichs einer gemäß den Darstellungen der Figuren 2 bis 4 verschlossenen Durchtrittsöffnung.

Der diese Durchtrittsöffnung verschließende Verschlusskörper ist vorliegend in zwei Segmentteile geteilt, nämlich in ein Aktivsegmentteil 6 und ein Passivsegmentteil 7. Die Körperaufnahme ist vorliegend in zwei Aufnahmeteile geteilt, nämlich in ein erstes Aufnahmeteil 70 für das Passivsegmentteil 7 und ein zweites Aufnahmeteil 60 für das Aktivsegmentteil 6. Die Aufnahmeteile 70, 60 sind aus einer nicht dargestellten getrennten Lage heraus zum Erreichen der dargestellten verbundenen Lage lösbar miteinander verbunden worden, man sagt auch angedockt. Streng genommen ist das vollständige Andocken gemäß den Darstellungen der Figuren 2 bis 4 noch nicht vollständig, weil das Passivsegmentteil noch verriegelt 2 ist. Zieht man erfindungsgemäß die Aufnahmeteile zum vollständigen Andocken vollständig fest, löst sich die Verriegelung 2 durch seitliches Ausweichen einer Passivdichtung 3 des ersten Aufnahmeteils 70. Gemäß einer nicht näher dargestellten Ausführungsform der Erfindung sind die Passivdichtung 3 und das erste Aufnahmeteil 70 einteilig ausgeführt.

In der nicht dargestellten getrennten Ausgangslage war das Passivsegmentteil 7 in dem ersten Aufnahmeteil 70 noch fixiert oder gemäß dem Ausführungsbeispiel gar verriegelt. Dies ist im dargestellten Ausführungsbeispiel auch zunächst nach dem Verbinden der Aufnahmeteile mittels der Passivdichtung 3 im Zusammenwirken mit in einem in radialer Richtung durch übereinstimmende Radialöffnungen der Aufnahmeteile hindurch bzw. eintretenden Stift 72 erhalten. Entriegelt wird das Passivsegmentteil 7 gemäß dem dargestellten Ausführungsbeispiel durch Betätigen einer radial außen an der Passivdichtung 3 anliegenden ersten Aktivdichtung 4, welches unten in einem Bereich des Hintergreifens ein radial nach außen gerichtetes Ausweichen der Passivdichtung 3 unter Lösen oder zumindest ausreichend Schwächen des Hintergriffs bewirkt. Um dem Lösen des Hintergriffs Raum zu bieten ist eine Aussparung 62 oder besonders flexibel ausgeführte Dichtlippe in Bereich des Hintergriffs unterhalb der Passivdichtung 3 ausgeführt.

Die Verriegelung 2 dient mithin zum reversibel lösbaren Fixieren des Passivsegmentteils 7 in seinem Aufnahmeteil 70. Das erste Aufnahmeteil 70 besteht vorliegend vollständig aus Kunststoff, ebenso das Passivsegmentteil 7. Nicht dargestellt ist eine nicht reversibel lösbare Fixierung des Passivsegmentteils. Statt des dargestellten Hintergriffs hätte hierzu zeichnerisch ohne Besonderheit eine Einklebung eine umlaufende Sollbruchstelle gezeigt. Aber auch eine Sollbruchstelle war nicht erforderlich, um im Rahmen der nun dem Fachmann beschriebenen Erfindung eine ausreichend prozesssicher lösbare und abdichtende Fixierung des Passivsegmentteils 7 in seinem Aufnahmeteil 70 zu gewährleisten. Diese Möglichkeit sei zur Ergänzung der obigen Beschreibung eingangs hier erneut genannt.

In der dargestellten verbundenen und weiterhin entriegelten Lage ist das Aktivsegmentteil 6 gemeinsam mit dem Passivsegmentteil 7 unter Kraftübertragung von dem Aktivsegmentteil 6 auf das Passivsegmentteil 7 in dem zweiten Aufnahmeteil 60 die Durchtrittsöffnung vollständig freigebend bewegbar, vorliegend um eine aktivsegmentexterne Achse Ae drehbar.

Die Aufnahmeteile 70, 60 weisen zum übereinstimmenden Ausrichten der Aufnahmeteile 70, 60 mit gemeinsamer Durchtrittsöffnung eine übereinstimmende Kontur 9 auf, vorliegend eine über den vollständigen Umfang umlaufende Kontur, nämlich radial außen umlaufend am ersten Aufnahmeteil 70 und radial innen umlaufend am zweiten Aufnahmeteil 60.

Das Aktivsegmentteil 6 und das Passivsegmentteil 7 bilden nach gedachtem Ausschwenken der Segmentteile um die segmentexterne Achse Ae dem zweiten Aufnahmeteil 60 zugewandt eine Oberfläche mit einem im Querschnitt gesehen gemeinsam stetigen, ineinander übergehenden Kurvenverlauf aus. Vorliegend bilden beide ein Kugelsegment aus.

Eine zweite Aktivdichtung 5 ist gemäß dargestelltem Ausführungsbeispiel in einem um die Durchtrittsöffnung umlaufenden Bereich zwischen dem Aufnahmeteil 60 und dem Aktivsegmentteil 6 angeordnet. Vorliegend ist eine hydraulisch in ihren Eigenschaften veränderbare Aktivdichtung 5 verwendet.

Die Segmentteile 6, 7 des Verschlusskörpers bilden einander zugewandt in der verbundenen Lage vorliegend einen vollflächigen Kontakt zueinander aus, der immer gesichert bleibt und nicht radial außen auseinander zu klaffen oder zu schnäbeln droht, wie im Fall der Mehrfachklappenvorrichtung aus Figur 1.

Gemäß dem dargestellten Ausführungsbeispiel berühren die Segmentteile 6, 7 mit einer gemeinsamen den Aufnahmeteilen 70, 60 zugewandten Dichtfläche 76 einen nicht erkennbaren, teilumfänglich der Dichtfläche 76 zugewandt angeordneten Abstreifer.

### Bezugszeichenliste:

- 1: Zentrierung
- 2: Verriegelung
- 3: Passivdichtung
- 4: erste Aktivdichtung
- 5: zweite Aktivdichtung
- 6: Aktivsegment
- 7: Passivsegment
- 8: Wandungsbereich
- 9: Kontur

- 10: erste Teilklappe
- 14: Passivgehäuse
- 20: zweite Teilklappe
- 22: Zapfen
- 24: Aktivgehäuse
- 26: Dichtband
- 30: dritte Teilklappe
- Ai: klappeninterne Achse

- 60: zweites Aufnahmeteil
- 62: Aussparung
- 67: Sekantenebene

- 70: erstes Aufnahmeteil
- 72: Stift
- 76: Dichtfläche

- Ae: segmentexterne Achse
- D: Durchflussrichtung

## Patentansprüche

1. Segmentventil (1), insbesondere Kugelsegmentventil, mit einem Verschlusskörper und einer Körperaufnahme, zum Absperren und vollständigen Öffnen zumindest eines vollständigen Zentralbereichs einer Durchtrittsöffnung **dadurch gekennzeichnet, dass**
1.1 der Verschlusskörper zumindest in zwei Segmentteile geteilt ist, nämlich zumindest in ein Aktivsegmentteil (6) und ein Passivsegmentteil (7) und dass
1.2 die Körperaufnahme in zumindest zwei Aufnahmeteile geteilt ist, nämlich zumindest in ein erstes Aufnahmeteil (70) für das Passivsegmentteil (7) und ein zweites Aufnahmeteil (60) für das Aktivsegmentteil (6),
1.3 wobei die Aufnahmeteile (70, 60) aus einer getrennten Lage heraus zum Erreichen einer verbundenen Lage lösbar miteinander verbindbar sind und wobei
1.4 in der getrennten Lage das Passivsegmentteil (7) in dem ersten Aufnahmeteil (70) zumindest fixiert ist.

2. Segmentventil nach Anspruch 1,
**dadurch gekennzeichnet, dass** das erste Aufnahmeteil (70) eine Verriegelung (2) zum reversibel lösbaren Fixieren aufweist, insbesondere dass das erste Aufnahmeteil vollständig aus Kunststoff besteht.

3. Segmentventil nach einem der Ansprüche 1 oder 2,
**dadurch gekennzeichnet, dass** zumindest in der verbundenen Lage das Aktivsegmentteil (6) gemeinsam mit dem Passivsegmentteil (7), unter Kraftübertragung von dem Aktivsegmentteil (6) auf das Passivsegmentteil (7), in dem zweiten Aufnahmeteil (60), die Durchtrittsöffnung zumindest weitgehend, bevorzugt vollständig freigebend, bewegbar ist, insbesondere um eine aktivsegmentexterne Achse (Ae) drehbar.

4. Segmentventil nach einem der vorangehenden Ansprüche,
**dadurch gekennzeichnet, dass** das erste Aufnahmeteil (70) dem Passivsegmentteil (7) zugewandt eine sich über den gesamten Umfang durchgehend in einem radialen Wandungsbereich (8) erstreckende Passivdichtung (3) aufweist.

5. Segmentventil nach einem der vorangehenden Ansprüche,
**dadurch gekennzeichnet, dass** die Aufnahmeteile (70, 60) zum übereinstimmenden Ausrichten der Aufnahmeteile (70, 60) mit gemeinsamer Durchtrittsöffnung zumindest jeweils eine übereinstimmende Kontur (9) aufweisen, insbesondere eine über den vollständigen Umfang umlaufende Kontur, die besonders bevorzugt radial außen umlaufend am ersten Aufnahmeteil (70) und radial innen umlaufend am zweiten Aufnahmeteil (60) ausgeführt sind.

6. Segmentventil nach einem der vorangehenden Ansprüche,
**dadurch gekennzeichnet, dass** der Aktivsegmentteil (6) und der Passivsegmentteil (7) zumindest dem zweiten Aufnahmeteil zugewandt eine Oberfläche mit im Querschnitt gesehen gemeinsam stetigen, ineinander übergehenden Kurvenverlauf ausbilden, insbesondere gemeinsam ein Kugelsegment ausbilden.

7. Segmentventil nach einem der vorangehenden Ansprüche,
**dadurch gekennzeichnet, dass** das erste Aufnahmeteil (70) mit zumindest einem Verriegelungsmittel in der getrennten Lage den Passivsegmentteil (7) zumindest teilumfänglich hintergreift, um den Passivsegmentteil (7) ansonsten über den vollständigen Umfang hinweg in dichtendem Kontakt mit dem ersten Aufnahmeteil (70) zu halten.

8. Segmentventil nach den Ansprüchen 4 und 7,
**dadurch gekennzeichnet, dass** die Passivdichtung (3) als das hintergreifende Dichtungsmittel ausgebildet ist.

9. Segmentventil nach einem der vorangehenden Ansprüche,
**dadurch gekennzeichnet, dass** das erste Aufnahmeteil (70) zumindest ein Entriegelungsmittel aufweist oder aus zumindest einem Entriegelungsmittel besteht, das in zumindest einem Umfangsbereich
9.1 entweder rotatorisch um eine gedachte, um die Durchtrittsöffnung herum verlaufende Umfangslinie
9.2 oder in radialer Richtung translatorisch bewegbar ist
9.3 oder bei mehrteiliger Ausbildung nach beiden Bewegungsformen bewegbar ist.

10. Segmentventil nach einem der vorangehenden Ansprüche,
**dadurch gekennzeichnet, dass** eine erste Aktivdichtung (4) um die Durchtrittsöffnung, insbesondere entlang der übereinstimmenden Kontur gemäß Anspruch 5, umlaufend zwischen einem unbeweglichen Teil des ersten Aufnahmeteils (70) und einem beweglichen Teil (3) des ersten Aufnahmeteils (70) oder des zweiten Aufnahmeteils (60) angeordnet ist, insbesondere eine pneumatisch oder hydraulisch in ihren Eigenschaften veränderbare Aktivdichtung (4).

11. Segmentventil nach einem der vorangehenden Ansprüche,
**dadurch gekennzeichnet, dass** eine zweite Aktivdichtung (5) in einem um die Durchtrittsöffnung umlaufenden Bereich zwischen dem Aufnahmeteil (60) und dem Aktivsegmentteil (6) angeordnet ist, insbesondere eine pneumatisch oder hydraulisch in ihren Eigenschaften veränderbare Aktivdichtung (5).

12. Segmentventil nach einem der vorangehenden Ansprüche,
**dadurch gekennzeichnet, dass** die Segmentteile (6, 7) des Verschlusskörpers einander zugewandt in der verbundenen Lage einen vollflächigen oder zumindest teilflächigen Kontakt zueinander ausbilden, insbesondere in einer gemeinsamen Sekantenebene und / oder in einer weiteren in Umfangsrichtung umlaufenden Kontur.

13. Andockverfahren zum kontaminationsfreien Verbinden zweier Gebinde oder Rohrleitungen mit einem Segmentventil nach einem der vorangehenden Ansprüche.

14. Andockverfahren nach Anspruch 13,
**dadurch gekennzeichnet, dass** unter koaxialer Ausrichtung der zwei Segmentteile (6, 7) zum Verbund des Verschlusskörpers die Aufnahmeteile (70, 60) zueinander zentriert miteinander verbunden werden, insbesondere mittels der übereinstimmenden Kontur (9) der Aufnahmeteile (70, 60).

15. Andockverfahren nach einem der Ansprüche 13 oder 14,
**dadurch gekennzeichnet, dass** das Verbinden der Aufnahmeteile (70, 60) ein Lösen der Fixierung des Passivsegmentteils (7) gegenüber dem ersten Aufnahmeteil (70) bewirkt, insbesondere durch Bruch einer Einklebung des Passivsegmentteils (7) in das erste Aufnahmeteil (70).

16. Andockverfahren nach einem der Ansprüche 13 bis 15,
**dadurch gekennzeichnet, dass** aus der verbundenen Lage heraus die Segmentteile (6, 7) des Verschlusskörpers um eine gemeinsame segmentexterne Achse (Ae) herum aus einer die Durchtrittsöffnung vollständig verschließenden in eine die Durchtrittsöffnung vollständig öffnende Position schwenkbar sind, insbesondere einhergehend damit, dass die Segmentteile (6, 7) mit einer gemeinsamen den Aufnahmeteilen (70, 60) zugewandten Dichtfläche (76) an einen zumindest teilumfänglich der Dichtfläche (76) zugewandt angeordneten Abstreifer berühren.

17. Verwendung eines Segmentventils, insbesondere eines Segmentventils nach einem der Ansprüche 1 bis 12, mit einem zumindest zweiteiligen Verschlusskörper in einer zumindest weitgehend kontaminationsfreien Verbindung zwischen einem Einweggebinde, das zumindest teilweise aus Kunststoff besteht, und einem Metallrohrleitungssystem oder - anschluss, wobei besonders bevorzugt ein vollständig aus Kunststoff bestehender Verschluss des Einweggebindes ein funktionaler Bestandteil des Segmentventils ist.

18. Aufnahmeteil eines Segmentventils nach einem der Ansprüche 1 bis 12 mit dem jeweiligen eingesetzten Segmentteil (6, 7) des geteilten Verschlusskörpers, insbesondere im Fall der Aufnahme des Passivsegmentteils (7) mit einem vollständig aus Kunststoff bestehenden Segmentteil, das besonders bevorzugt die Form eines Kugelsegments aufweist.

19. Doppelventil mit zumindest zwei Verschlusskörpern, insbesondere zwei Kugelsegmenten, zum zumindest weitgehend kontaminationsfreien Verbinden zweier Gebinde miteinander oder zum zumindest weitgehend kontaminationsfreien Verbinden eines Gebindes mit einem Rohrleitungssystem oder zum anderweitigen derartigen Andocken,
**dadurch gekennzeichnet, dass** zumindest einer der Verschlusskörper zumindest zweiteilig, nämlich in ein Aktivsegmentteil (6) und ein Passivsegmentteil (7) geteilt, ausgeführt ist.

20. Doppelventil nach Anspruch 19,
**dadurch gekennzeichnet, dass** ein erster der Verschlusskörper um eine erste Rotationsachse und ein zweiter der Verschlusskörper um eine zweite, von der ersten Rotationsachse beabstandeten Rotationsachse aus der Durchtrittsöffnung herausschwenkbar sind.

21. Doppelventil nach einem der Ansprüche 19 oder 20,
**dadurch gekennzeichnet, dass** die Verschlusskörper mechanisch aneinander gekoppelt oder unabhängig voneinander bewegbar ausgeführt sind.
